(19) Europäisches Patentamt
European Patent Office
Office européen des brevets

(11) **EP 2 730 595 A1**

(12) **EUROPEAN PATENT APPLICATION**
published in accordance with Art. 153(4) EPC

(43) Date of publication:
**14.05.2014 Bulletin 2014/20**

(21) Application number: **11869449.6**

(22) Date of filing: **08.07.2011**

(51) Int Cl.:
***C08G 18/32*** (2006.01) ***C08G 18/48*** (2006.01)
***C08G 18/44*** (2006.01) ***C08G 18/10*** (2006.01)
***C08G 18/72*** (2006.01) ***C04B 24/24*** (2006.01)
***C04B 26/16*** (2006.01)

(86) International application number:
**PCT/CN2011/076987**

(87) International publication number:
**WO 2013/007004 (17.01.2013 Gazette 2013/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicants:
- **Jiangsu Sobute New Materials Co., Ltd.**
  **Jiangning District**
  **Nanjing**
  **Jiangsu 211103 (CN)**
- **Jiangsu Research Institute Of Building Science Co. Ltd.**
  **Nanjing, Jiangsu 210008 (CN)**
- **Nanjing Bote Building Materials Co,. Ltd**
  **Jiangsu 210047 (CN)**
- **Jiangsu Bote New Materials Co., Ltd**
  **Nanjing, Jiangsu 211103 (CN)**

(72) Inventors:
- **MIAO, Changwen**
  **Nanjing**
  **Jiangsu 210008 (CN)**
- **DING, Bei**
  **Nanjing**
  **Jiangsu 210008 (CN)**
- **ZHOU, Dongliang**
  **Nanjing**
  **Jiangsu 210008 (CN)**

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(54) **WATER-DISPERSIBLE AMPHOTERIC POLYURETHANE, PREPARATION METHOD THEREFOR, AND USE THEREOF IN REINFORCING CONCRETE**

(57) The present invention relates to a water-dispersible amphoteric polyurethane and a preparation method for it. The water-dispersible amphoteric polyurethane is prepared from polyisocyanate compound, polyol compound, diol compound containing an anionic group or a potential anionic group, tertiary or quaternary amine cationic group compound containing at least two active H functional groups and polyamine compound containing polyoxyethylene. During preparation, the diol compound and tertiary or low-molecular quaternary amine cationic group compound shall be controlled for the dosing order, and then neutralized and chain-extended to finally get the target product. The present invention further relates to the application of the water-dispersible amphoteric polyurethane in reinforced concrete, wherein the dosing amount is 0.1 - 5% of the total mass of the concrete.

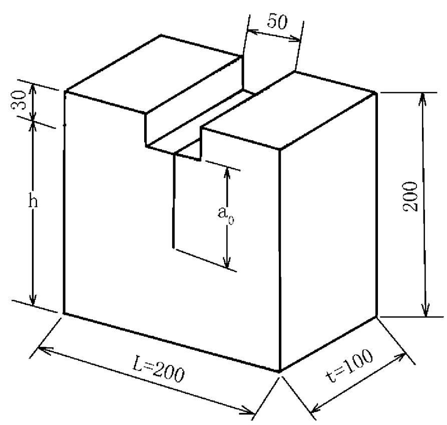


FIG. 1

EP 2 730 595 A1

## Description

### 1. Technical Field

The present invention relates to a water-dispersible amphoteric polyurethane, a preparation method for it and its application in reinforced concrete.

### 2. Description of Related Art

Concrete is the most consumable and the most widely used building material in the modem civil engineering. Concrete, as a typical brittle material, features high compressive strength, low tensile strength and small ultimate tensile strength, with the tensile strength only about 1/10 of the compressive strength. It will be cracked when the tensile stress exceeds the ultimate tensile strength. Concrete cracks penetrating into the concrete channel as harmful substances may seriously affect the durability of concrete, and further result in the premature damage of the concrete structure. Currently, the toughness of concrete is enhanced mainly through technical means, such as modifying polymer latex, adding fiber, preparing high-toughness fiber cement-based composite (ECC composite) and reactive powder concrete (RPC). These technical means can greatly improve concrete toughness, but there are still a lot of defects: polymer latex modified concrete dramatically decreases the compressive strength of concrete; fiber material's dispersion in concrete and interface adhesion are still difficulties requiring ideal solution and high cost; the expensive cost and complicated technology of ECC composite drive engineering practice away, and it is still limited to small-scale test or partial attempt in spite of almost ten years' development, its popularization and application are highly restricted; the key problem in front of RPC material in engineering practice is high shrinkage.

Polyurethane resin, boasting excellent flexibility, hardness and abrasion resistance, is broadly used in many fields such as architecture, painting and automobile. It is a long history that people try to improve the physical properties of cement concrete by means of the property of polyurethane resin film formation. European Patent EP-23579 discloses that cement concrete is rapidly and completely hardened by adding a small amount of polyisocyanate. However, the hydrophobic polyurethane used fails to stably disperse in inorganic material matrix and form uniform polymer network, so leading to undesirable working properties.

In US Patents US-P413014 and US-P4228053, hydrophobic polyisocyanate prepolymer containing excessive NCO groups are mixed in cement concrete, the prepolymer reacts with water in cement concrete mixture under the high reaction activity of the NCO groups and water molecules, in this way to improve the strength and durability of cement concrete. The reaction between NCO group and water is uncontrollable and a high volume of carbon dioxide gas is generated during reaction, so the internal structure of cement concrete matrix deteriorates, thus the method is impossible to be applied in practical engineering.

Chinese Patents CN 1189471A and CN 1088047C disclose a non-ionic, water-dispersible polyisocyanate as a concrete additive, wherein water-soluble polyethylene glycol is used to react with isocyanate in order to stably disperse isocyanate in cement concrete matrix. In addition, reaction products contain high amount of unreacted isocyanate groups. This additive can greatly improve the strength and dynamic E modulus of resilience of highly hardened concrete. The rapid reaction of the unreacted isocyanate groups in the additive and water generates a lot of carbon dioxide gas, which leads to high gas content of hardened cement mortar and destroys the pore structure of the hardened inorganic material matrix harmful to the durability. The mechanism of this additive reinforcing and hardening cement-based material is that, the polymer reacts with the mixing water in the cement mortar and then 3D spatial polymer network is formed in inorganic material matrix, so the dosing volume is high and the reaction of the polymer and mixing water is uncontrollable. Furthermore, since the strong-alkali, high-salt environment can speed up the fracture of polymer molecular chain, the polymer network deteriorates and the long-term reinforcing property of cement-based material is decreased accordingly.

### BRIEF SUMMARY OF THE INVENTION

The objective of the present invention is to provide a water-dispersible amphoteric polyurethane stably dispersed in strong-alkali environment and a preparation method therefor, and the other objective is to provide the water-dispersible amphoteric polyurethane's application in reinforced concrete with the concrete toughness to be highly improved under a very low dosing amount.

The technical solution of the present invention is as follows: a water-dispersible amphoteric polyurethane is prepared from Component A, B, C, D and E through polymerization and chain-extension reaction:

Component A, polyisocyanate compound;
Component B, selected from polyester polyol, polyether glycol, polycarbonate glycol or polyacrylate glycol;
Component C, diol compound containing an anionic group or a potential anionic group;

Component D, tertiary or quaternary amine cationic group compound containing at least two active H functional groups; and

Component E, polyamine compound containing polyoxyethylene as shown in structural formula (9),

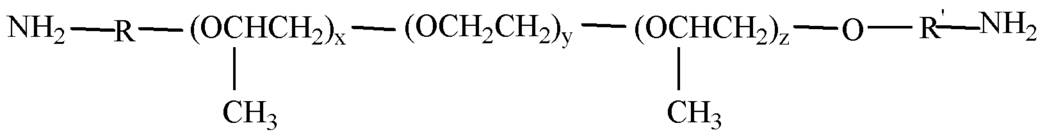

(9)

R and R' are alkyl containing 1 - 6 carbon atoms;

y is an integer from 5 to 400, (x+z) is an integer from 0 to 100; if (x+z) ≠0, Component E is random copolymer or block copolymer;

wherein, the molar ratio of Component D to C, namely D/C, is 1:20 - 20:1;

the molar ratio of Component E to B, C and D, namely E/(B+C+D), is 1:100 - 20:100;

and the molar ratio of the isocyanate groups in Component A to the total amount of the active H functional groups in Component B, C, D and E is 2.0:0.6 - 2.0:1.8.

Component A polyisocyanate compound in the present invention refers to the polyisocyanate compound commonly used for preparing polyurethane, including, for example, diisocyanate compound, such as aliphatic diisocyanate compound, alicyclic diisocyanate compound and aromatic diisocyanate compound. Preferred aliphatic diisocyanate compound consists of ethylidene diisocyanate, butylidene diisocyanate, hexamethylene diisocyanate (1,6-diisocyanate hexane), octamethylene diisocyanate, decamethylene diisocyanate, dodecanediyl diisocyanate, decamethylene diisocyanate, lysine diisocyanate derivatives, 2,2,4-trimethylhexamethylene diisocyanate or tetramethyl-hexane diisocyanate; preferred alicyclic diisocyanate compound consists of 1,4-, 1,3- or 1,2-diisocyanate cyclohexane, 4,4'- or 2,4'-di(isocyanate cyclohexyl) methane, 1-isocyanate-3,3,5-trimethyl-5-(isocyanate methyl) cyclohexane (namely isophorone diisocyanate), 1,3-or 1,4-di(isocyanate cyclohexyl) cyclohexane or 2,4- or 2,6-diisocyanate-1-methyl cyclohexane; preferred aromatic diisocyanate consists of 2,4- or 2,6-toluene diisocyanate and its isomer mixture, m- or p-phthalylidene diisocyanate, 2,4'- or 4,4' diisocyanate diphenyl methane and its isomer mixture, 1,3- or 1,4-phenylene diisocyanate, 1,5-naphthalene diisocyanate, diphenylene 4,4'-diisocyanate, 4,4'-diisocyanate-3,3'-dimethylbiph, 3-methyl-4,4'-diisocyanate diphenyl methane, tetramethyl phthalylidene diisocyanate, 1,4-diisocyanate phenyl or diphenylether 4,4'-diisocyanate, more preferably, hexamethylene diisocyanate, 1,3-di(isocyanate methyl) cyclohexane, isophorone diisocyanate and di(isocyanate cyclohexyl) methane, and most preferably, isophorone diisocyanate or hexamethylene diisocyanate. Component A can be used separately or combined with others.

Component B refers to double or multiple functional groups polyol compound commonly used for preparing polyurethane. Appropriate polyol compound consists of polyester polyol, polyether glycol, polycarbonate glycol, polycaprolactone glycol or polyacrylate glycol, preferably polyether glycol, including polyglycol, polypropylene glycol, polytetramethylene glycol, butylene glycol-adipic acid copolymer, hexanediol-adipic acid copolymer or mixture of any ratio, and most preferably polypropylene glycol. Polyester polyol is preferably polyethylene adipate glycol. The weight-average molecular weight of Component B is preferably 600 - 6000, more preferably 1000 - 3000, most preferably 1000 - 2000.

It shall be noted that Component B does not contain any compound described in Component C and D, and can be used separately or combined with at least 2 substances in any ratio.

Component C, diol compound containing an anionic group or a potential anionic group, aiming at providing anionic group, is preferably selected from dimethylol propionic acid, dimethylol butyric acid, caprolactoneglycol containing carboxyl or 1,2-dihydroxyl-sodium propanesulfonic acid, and most preferably from dimethylol propionic acid or dimethylol butyric acid. Component C can be used separately or combined with at least 2 substances in any ratio.

For Component D, tertiary or quaternary amine cationic group compound containing at least two active H functional groups, when it contains more than two active hydrogen functional groups, the water-dispersible amphoteric polyurethane is provided with branched structure.

Component D is preferably one or the mixture of over 2 selected from the compounds expressed in structural formula (1) - (8):

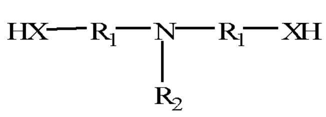

(1)

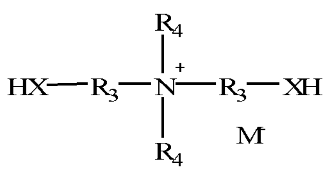

(2)

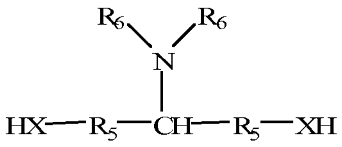

(3)

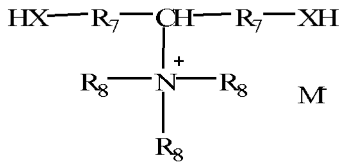

(4)

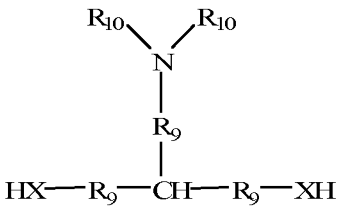

(5)

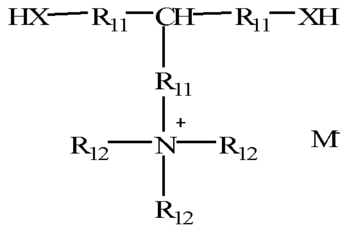

(6)

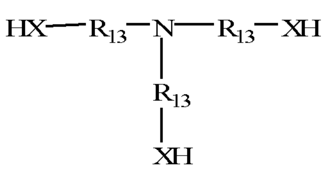

(7)

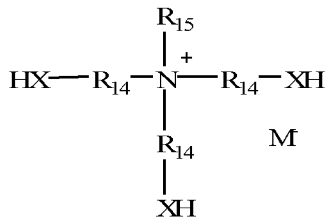

(8)

Wherein, $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$ and $R_{15}$ are alkyl containing 1 - 6 carbon atoms, and the alkyl can be linear alkyl, branched alkyl or cycloalkyl;

X is oxygen atom, sulphur atom, NH or $NR_{16}$ group. $R_{16}$ is alkyl containing 1 - 6 carbon atoms. The alkyl can be linear alkyl, branched alkyl or cycloalkyl;

M is counter ion, for example chlorine ion.

Specifically, Component D is preferably selected from N-methyl diethanolamine, N-ethyl diethanolamine, N-butyl diethanolamine, N-methyl dipropanolamine or triethanolamine, more preferably from N-methyl diethanolamine or N-tertiary butyl diethanolamine. Certainly, Component D is not limited to the compounds expressed in structural formula (1) - (8), for example diethanolamine isopropanolamine. Component D can be used separately or combined with at least 2 substances in any ratio.

For Component E, the alkyl in structural formula (9) can be linear alkyl, branched alkyl or cycloalkyl.

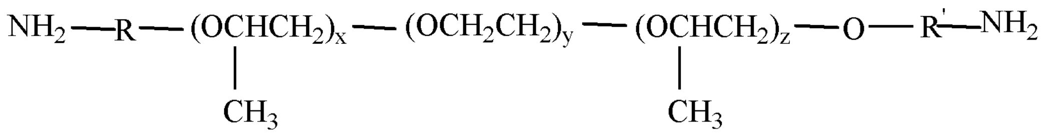

(9)

When (x+z) =0, Component E is polyoxyethylene ether diamine; when (x+z) ≠ 0, Component E is random copolymer or block copolymer.

In formula (7), no matter (x+z) =0 or (x+z) ≠ 0, y is preferably 10 - 400, more preferably 10 - 200, most preferably 10 - 50;

when (x+z) ≠ 0, (x+z) is preferably 2 - 50, more preferably 2 - 10;

no matter (x+z) =0 or (x+z) ≠ 0, (x+y+z) is preferably 10 - 300, more preferably 10 - 200, most preferably 10 - 50;

The molar ratio of $C_2H_4O$ and $C_3H_6O$ in formula (7), namely y/(x+z) is preferably 10:0 - 2:8, more preferably 10:1 - 3:7, most preferably 10:1 - 4:6.

The molar ratio of the isocyanate groups in Component A to the total amount of the active H functional groups in Component B, C, D and E is preferably 2.0:0.8-2.0:1.8, more preferably 2.0:1.0 - 2.0:1.8.

The percentage of Component B in the total mass of Component B, C, D and E is preferably 50 - 85%, more preferably 60 - 80%.

To get better dispersion effect in grout strong-alkali, high-salt system, the molar ratio of Component D to C is

preferably 1:1 - 1:10, more preferably 1:3 - 1:10.

The mass ratio of Component E to B, C and D, namely E/(B+C+D), is preferably 5:100 - 15:100.

The method for preparing the water-dispersible amphoteric polyurethane comprises the following steps in order:

(1) Component A, B, D and E react to get the prepolymer containing isocyanate groups;
(2) the prepolymer containing isocyanate groups react with Component C;
(3) then further carry out neutralization and chain-extension to get the water-dispersible amphoteric polyurethane; or,

(1) Component A, B, C and E react to get prepolymer containing isocyanate groups;
(2) the prepolymer containing isocyanate groups react with Component D;
(3) then further carry out neutralization and chain-extension to get the water-dispersible amphoteric polyurethane.

The reaction in Step (1) and (2) can be carried out in the presence of appropriate catalyst, and the reaction conditions are conventional conditions for preparing polyurethane. The catalyst can be any polymerization catalyst commonly used for preparing polyurethane and capable of getting target products without any special limitation, specifically including tertiary amine catalyst and organic metal catalyst. The examples of tertiary amine catalyst include [2,2,2] -diazabicyclo octane (DABCO), 1,4-diaminobutane, N-methylmorpholine and 1,8-diazabicyclo[5,4,0]undec-7-ene (DBU); the examples of organic metal catalyst include dibutyltin dilaurate.

In the preparation method of the present invention, organic solvents, especially those capable of dissolving Component A to E to target products are used in Step (1) and (2) according to the need. The examples of organic solvents include: amide, such as N-methylpyrrolidone, dimethyl fumaramide and dimethyl amide; and ketones, such as acetone and methyl ethyl ketone; esters, such as ethyl acetate and isobutyl acetate.

In Step (3) of the preparation method of the present invention, alkaline solution is used to neutralize. The examples include water solution with triethylamine, triethanolamine, ammonia, sodium hydroxide, potassium hydroxide or 2-amido-2-methyl-1-propanol dissolved.

In the preparation method of the present invention, the reaction in Step (1) and (2) is preferably carried out in organic solvents, and then the reaction mixture in Step (2) is dispersed in alkaline water solution for chain-extension reaction.

The method for preparing the water-dispersible amphoteric polyurethane is specifically as follows:

(1) put Component A, B, C and E in a reactor, control the reaction temperature to 70 - 85°C and maintain it for 3h with the presence of organic solvent and under the protection of nitrogen gas to get the prepolymer containing isocyanate groups;
(2) add Component D, mix additional organic solvent, further maintain reaction for 3h to get the prepolymer containing residual isocyanate groups;
(3) cool the prepolymer containing residual isocyanate groups to below 50°C, add it into the alkaline water solution under the mixing condition, maintain reaction for 3h at a temperature of 50°C; remove the organic solvent after reaction to get the water solution of the target product.

Certainly, it is also feasible to add Component D in Step (1) and add Component C in Step (2) for reaction.

In the application of the water-dispersible amphoteric polyurethane in reinforced concrete, the dosing amount of the water-dispersible amphoteric polyurethane is 0.1 - 5% of the total mass of the concrete. It shall be noted that, the water-dispersible amphoteric polyurethane provided herein can be used together with various concrete additives, for instance, water reducer, air entraining agent, antifoaming agent, retarding admixture, hardening accelerator, anti-corrosion admixture, thickener, expansion agent, accelerating agent, antifreeze, shrinkage reducing agent and curing agent.

In the water-dispersible amphoteric polyurethane of the present invention, anionic groups and cationic groups are randomly distributed, wherein tertiary or quaternary amine cationic groups are connected to the molecular main chain or side chain, anionic groups are connected to the molecular side-chain and the molar ratio of anionic groups to tertiary or quaternary amine cationic groups is limited; moreover, polyamine particular structure with polyoxyethylene is introduced, and carbamido is formed in the water-dispersible amphoteric polyurethane. The water-dispersible amphoteric polyurethane has ideal protein model structure in strong alkaline water solution,. Unexpectedly, it is stably dispersed in the strong-alkali, high-salt system of concrete. In addition, it can greatly improve fracture energy and toughness under a low dosing amount without affecting the compressive, bending strength and working properties. The water-dispersible amphoteric polyurethane of the present invention can be used in various concrete building engineering, especially suitable for high-dynamic load and high-durable concrete buildings, for example, roads, bridges, tunnels and dams engineering.

## BRIEF DESCRIPTION OF THE SEVERAL VIEWS OF THE DRAWINGS

FIG. 1 is a fracture test mold of the present invention.

## DETAILED DESCRIPTION OF THE INVENTION

The prevent invention is detailed in combination with preferred embodiments and comparative examples, but not limited to the embodiments.

The raw material component E related to the embodiments is as shown in Table 1, wherein JEFFAMINE ED-900 and JEFFAMINE ED-2003 are manufactured by Huntsman Company, and polyoxyethylene ether diamine with the weight-average molecular weight of 1,000 is short for PEG#1000 Diamine.

Table 1 Structural Parameters of Component E

| | $C_2H_4O$ | $C_3H_6O$ | Weight-average molecular weight |
|---|---|---|---|
| JEFFAMINE ED-900 | ~12.5 | ~6.0 | 1000 |
| JEFFAMINE ED-2003 | ~39 | ~6.0 | 2000 |
| PEG#1000 Diamine | ~21 | 0 | 1000 |

### Embodiment 1

(1) add 70g of isophorone diisocyanate (IPDI), 90g of polypropylene glycol (PPG-1000, the weight-average molecular weight is 1000), 16g of JEFFAMINE ED-900 and 20g of dimethylol butyric acid (DMBA) into four flasks of the mixer, thermometer, nitrogen gas inlet tube and reflux condenser. add 50g of ethyl acetate as the solvent, heat it in an oil bath to 80°C and maintain it for 3h under the protection of nitrogen gas to get the prepolymer containing isocyanate groups;

(2) add 2g of N-methyl diethanolamine (N-MDEA) and 60g of ethyl acetate, and further maintain reaction for 3h to get the prepolymer containing residual isocyanate groups;

(3) finally, cool the prepolymer containing residual isocyanate groups to 50°C, disperse it into 700g of water containing 10g of potassium hydroxide at a high mixing speed of 350r/min, maintain 50°C for 3h; recycle ethyl acetate from the water solution to get the water solution basically free from the target product ethyl acetate solvent.

### Embodiment 2 - 10

The test conditions and operation steps are the same as those in Embodiment 1. The raw materials and dosing amounts are as shown in Table 2.

Table 2 Mixing ratio in Embodiment 1 - 10

| | IPDI (g) | PPG-1000 (g) | DMBA (g) | N-MDEA (g) | JEFFAMINE ED-900 (g) | JEFFAMINE ED-2003 (g) | PEG#1000 Diamine (g) |
|---|---|---|---|---|---|---|---|
| Embodiment 1 | 70 | 90 | 20 | 5.0 | 14 | 0 | 0 |
| Embodiment 2 | 70 | 80 | 16 | 2.5 | 15 | 0 | 0 |
| Embodiment 3 | 70 | 90 | 12 | 1.0 | 0 | 38 | 0 |
| Embodiment 4 | 70 | 55 | 13 | 1.5 | 0 | 0 | 20 |
| Embodiment 5 | 70 | 70 | 10 | 1.0 | 6 | 0 | 6 |

(continued)

| | IPDI (g) | PPG-1000 (g) | DMBA (g) | N-MDEA (g) | JEFFAMINE ED-900 (g) | JEFFAMINE ED-2003 (g) | PEG#1000 Diamine (g) |
|---|---|---|---|---|---|---|---|
| Embodiment 6 | 70 | 60 | 17 | 3.5 | 20 | 20 | 0 |
| Embodiment 7 | 70 | 70 | 24 | 1.0 | 0 | 20 | 6 |
| Embodiment 8 | 70 | 65 | 1.0 | 16 | 13 | 0 | 0 |
| Embodiment 9 | 70 | 80 | 4.0 | 10 | 0 | 4.0 | 0 |
| Embodiment 10 | 70 | 55 | 2.0 | 2.0 | 10 | 0 | 0 |

**Embodiment 11 - 12**

The test conditions and operation steps are the same as those in Embodiment 1. The raw materials and dosing amounts are as shown in Table 3, wherein Component B in Embodiment 11 is polyethylene adipate glycol with the weight-average molecular weight being 2000; Component B in Embodiment 12 is polypropylene glycol (PPG-1000) with the weight-average molecular weight being 6000; N-MDEA is added into four flasks in Step (1) to react with IPDI, PPG-6000 and JEFFAMINE ED-900, while DMBA is added in Step (2).

Table 3 Mixing Ratio of Raw Materials in Embodiment 11 and 12

| | IPDI (g) | polydiethylene glycol adipate (g) | PPG-6000 (g) | DMBA (g) | N-MDEA (g) | JEFFAMINE ED-900 (g) | PEG#1000 diamine (g) |
|---|---|---|---|---|---|---|---|
| Embodiment 11 | 70 | 150 | 0 | 22.5 | 5.0 | 15 | 0 |
| Embodiment 12 | 70 | 0 | 180 | 29.0 | 5.0 | 0 | 15 |

**Comparative Example 1 - 2**

The test conditions and operation steps are the same as those in Embodiment 1. The components and dosing amounts are as shown in Table 4.

Table 4 Mixing Ratio of Raw Materials in Comparative Examples

| | IPDI (g) | PPG-1000 (g) | PEG-1000 (g) | DMBA (g) | N-MDEA (g) |
|---|---|---|---|---|---|
| Comparative Example 1 | 70 | 90 | 0 | 20 | 5 |
| Comparative Example 2 | 70 | 80 | 15 | 16 | 2.5 |

**Application Example 1**

With an ALV-7004 dynamic-static light scattering apparatus, measure hydromechanic radius ($R_h$) and mean-square radius of gyration (Rg) of water-dispersible amphoteric polyurethane prepared in Embodiment 1 - 12 and polyurethane prepared in Comparative Example 1 - 2 in different pH states to indicate the alkali resistance of polyurethane, wherein the concentration for measuring hydromechanic radius is 0.5wt%. The results are as shown in Table 5.

Table 5 Alkali Resistance of Polyurethane

| | pH=7 | | pH=13 | |
|---|---|---|---|---|
| | $R_h$ (nm) | Rg (nm) | $R_h$ (nm) | Rg (nm) |
| Embodiment 1 | 44.40 | 61.56 | 68.16 | 88.56 |
| Embodiment 2 | 58.35 | 89.36 | 95.36 | 101.23 |
| Embodiment 3 | 107.12 | 162.53 | 321.22 | 295.54 |
| Embodiment 4 | 85.23 | 111.43 | 158.56 | 195.48 |
| Embodiment 5 | 143.89 | 202.35 | 211.43 | 303.56 |
| Embodiment 6 | 79.63 | 97.36 | 86.32 | 123.41 |
| Embodiment 7 | 66.32 | 102.52 | 252.23 | 152.63 |
| Embodiment 8 | 50.12 | 77.88 | 203.51 | 99.55 |
| Embodiment 9 | 121.31 | 146.63 | 286.69 | 205.66 |
| Embodiment 10 | 91.68 | 134.52 | 178.52 | 232.69 |
| Embodiment 11 | 127.52 | 163.63 | 271.29 | 204.44 |
| Embodiment 12 | 183.65 | 222.22 | 266.31 | 285.58 |
| Comparative Example 1 | 43.85 | 37.63 | flocculation | flocculation |
| Comparative Example 2 | 73.50 | 107.43 | 100.59 | 113.50 |

When the pH value of the water-dispersible amphoteric polyurethane prepared in Embodiment 1 - 12 increases from 7 to 13 in the system, both Rg and $R_h$ increase, but stable and uniform dispersion can be still realized. The polyurethane in Comparative Example 1 flocculates in alkaline solution, so Rg and $R_h$ are impossible to be measured, and Comparative Example 2 also stably exists in alkaline condition. Wherein, Embodiment 1 possesses the best alkali-proof stability. When pH is 13, both Rg and $R_h$ are less than 150nm, increased by no more than 40%, and stable storage for 6 months is possible.

**Application Example 2**

Perform concrete test according to the concrete mixing ratio in Table 6. The materials are as below: 52.5-grade normal Portland cement manufactured by Jiangnan-Onoda Cement Co., Ltd.; class-I flyash manufactured by Nanjing Thermoelectric Power Plant; fine aggregate: river sand, max. grain size of 5mm, continuous grading, fineness modulus of 2.6, apparent density of 2.61g/cm$^3$; coarse aggregate: basalt crushed stone, apparent density of 2.84g/cm$^3$, bulk density of 1.53$\times$10$^3$kg/m$^3$; crushing strength of 3.3%, particle grading of 5 - 10mm and 10 - 20mm continuous grading. Additives: JM-PCA poly carboxylic acid super-plasticized admixture, produced by Jiangsu BOSUTE New Materials Co., Ltd.

Table 6 Mixing Ratio of Concrete (kg/m$^3$)

| Cement | Flyash | Water | Coarse aggregate | Fine aggregate | Water-cement ratio |
|---|---|---|---|---|---|
| 350 | 87.5 | 122.5 | 1072.5 | 720 | 0.35 |

Add newly mixed concrete into steel molds of 100mm$\times$100mm$\times$100mm and 100mm$\times$100mm$\times$400mm, and then test the compressive strength and bending strength after molding and hardening. See Table 7 for the results.

Based on Norm for Fracture Test of Hydraulic Concrete (DL/T 5332-2005), test the concrete fracture toughness by wedge-splitting method. See FIG. 1 for the test die with the length of 200mm, width of 100mm, height of 170mm and trough height of 30mm. All the concrete pieces are cured for the period of 28 days at 20$\pm$3°C and under 90% RH (relative humidity). Where,
the concrete fracture toughness is calculated by the formula below:

$$K_{IC} = \frac{3.675\left[1-0.12\left(\frac{a_0}{h}-0.45\right)\right]P_{H\max}}{t\sqrt{h}\left(1-a_0/h\right)^{\frac{3}{2}}}$$

wherein: $P_{H\max}$ is the maximum horizontal load, ( $P_H = \frac{P_v + mg}{2\tan\alpha}$ ; t is the thickness of the test pieces, h is the height of the test pieces, and $a_0$ is the prefabricated crack length.

The concrete fracture energy is calculated by the formula below:

$$G_F = \frac{W_1 + W_2}{A}$$

wherein, A is the area of the toughness fracture section, namely $A = t(h - a_0)$;
$W_1$ is $P_H$ *-CMOD* the load on deformation curve and the area covered by displacement curve;
$W_2$ is calculated by the formula below:

$$W_2 = \int_{\delta_1}^{\infty} \beta\delta^{-\lambda} / (2\tan\theta) d\delta = \frac{\beta}{2\tan\theta(\lambda-1)\delta^{\lambda-1}}$$

Table 7 Mechanical Properties of Concrete

| | Added Volume (wt%) | Compressive strength (MPa) | Flexural strength (MPa) | Fracture energy ($N\cdot m^{-1}$) |
|---|---|---|---|---|
| Blank concrete | 0 | 68.9 | 6.06 | 97 |
| Embodiment 1 | 1.0 | 68.3 | 6.92 | 220 |
| Embodiment 2 | 2.0 | 64.5 | 5.80 | 185 |
| Embodiment 3 | 5.0 | 60.3 | 6.32 | 195 |
| Embodiment 4 | 1.0 | 65.4 | 6.23 | 190 |
| Embodiment 5 | 3.0 | 68.0 | 7.21 | 203 |
| Embodiment 6 | 0.1 | 67.8 | 6.30 | 155 |
| Embodiment 7 | 1.5 | 65.5 | 6.72 | 180 |
| Embodiment 8 | 2.5 | 64.4 | 6.83 | 190 |
| Embodiment 9 | 1.5 | 63.6 | 6.72 | 185 |
| Embodiment 10 | 0.8 | 66.6 | 6.54 | 173 |
| Embodiment 11 | 0.5 | 68.0 | 6.43 | 160 |
| Embodiment 12 | 2.0 | 61.5 | 6.90 | 215 |
| Comparative Example 1 | 1.0 | -- | -- | -- |
| Comparative Example 2 | 1.0 | 66.6 | 6.41 | 103 |

After mixing the concrete with the addition of the polyurethane prepared in Comparative Example 1, the concrete becomes dense immediately and cannot flow, leading to difficulty in die setting and formation; by adding PEG-1000 in

Comparative Example 2, stable dispersion in cement mortar system can be maintain, but the fracture energy is not obviously increased and concrete toughness is not improved. After mixing the concrete with the addition of the water-dispersible amphoteric polyurethane prepared in Embodiment 1 - 12, the concrete can still keep high-plastic fluidity, exerting no impacts on die setting and formation. It can be concluded from Table 7 that, Embodiment 1 has the best toughness improvement effect, and the fracture energy is increased by 127% without decreasing the compressive strength of the concrete, thus effectively improving the concrete toughness.

Also it can be summarized from Application Example 1 and 2 that, the stable existence of water-dispersible amphoteric polyurethane in strong alkali condition is the premise of concrete toughness improvement, but not the decisive factor. The key is the introduction of Component E with particular structure in dispersible amphoteric polyurethane, wherein the amidocyanogen in Component E reacts with isocyanate groups to generate carbamido which acts together with the polyoxyethylene associated to unexpectedly improve the concrete toughness. The reason may be that the stably dispersed water-dispersible amphoteric polyurethane adjusts the formation process, structure and pattern of C-S-H hydrated gel in m/n sizes, thus greatly improving the concrete toughness.

## Claims

1. A water-dispersible amphoteric polyurethane, **characterized in that**, prepared from Component A, B, C, D and E through polymerization and chain-extension reaction:

    Component A, polyisocyanate compound;
    Component B, selected from polyester polyol, polyether glycol, polycarbonate glycol or polyacrylate glycol;
    Component C, diol compound containing an anionic group or a potential anionic group;
    Component D, tertiary or quaternary amine cationic group compound containing at least two active H functional groups; and
    Component E, polyamine compound containing polyoxyethylene as shown in structural formula (9),

    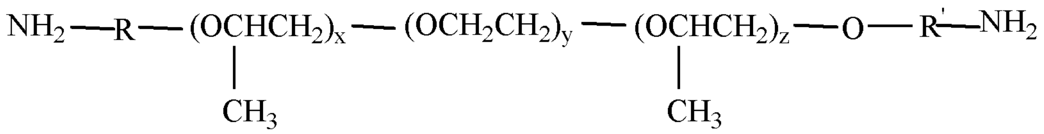

    (9)

    wherein, R and R' are alkyl containing 1 - 6 carbon atoms;
    y is an integer from 5 to 400, (x+z) is an integer from 0 to 100; if (x+z) ≠0, Component E is random copolymer or block copolymer;
    wherein, the molar ratio of Component D to C, namely D/C, is 1:20 - 20:1;
    the molar ratio of Component E to B, C and D, namely E/(B+C+D), is 1:100 - 20:100;
    and the molar ratio of the isocyanate groups in Component A to the total amount of the active H functional groups in Component B, C, D and E is 2.0:0.6 - 2.0:1.8.

2. The water-dispersible amphoteric polyurethane according to Claim 1, **characterized in that** the weight-average molecular weight of Component B is 600 - 6000.

3. The water-dispersible amphoteric polyurethane according to Claim 1, **characterized in that** Component C is one or the mixture of over 2 selected from dimethylol propionic acid, dimethylol butyric acid, caprolactone glycol containing carboxyl and 1,2-dihydroxyl-sodium propanesulfonic acid.

4. The water-dispersible amphoteric polyurethane according to Claim 1, **characterized in that** Component D is one or the mixture of over 2 selected from the compounds expressed in structural formula (1) - (8),

    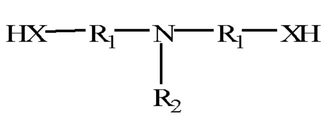 (1)

    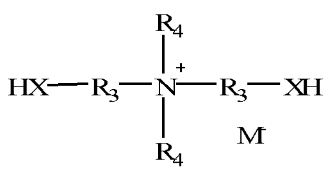 (2)

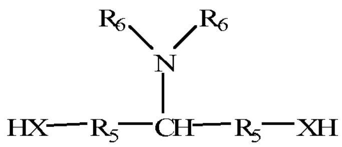 (3)

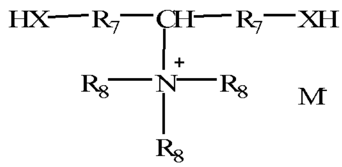 (4)

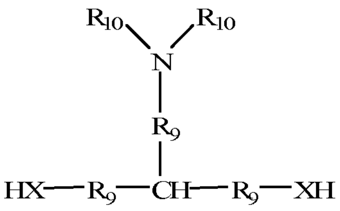 (5)

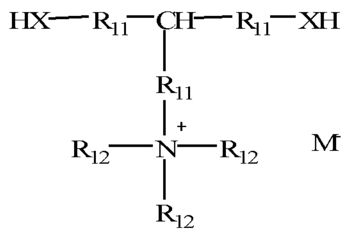 (6)

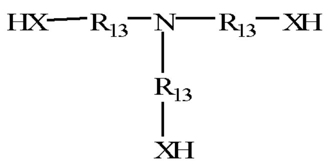 (7)

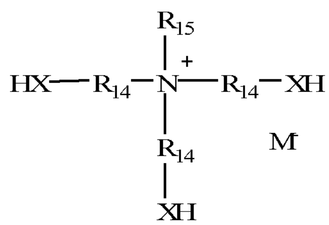 (8)

wherein, $R_1$, $R_2$, $R_3$, $R_4$, $R_5$, $R_6$, $R_7$, $R_8$, $R_9$, $R_{10}$, $R_{11}$, $R_{12}$, $R_{13}$, $R_{14}$ and $R_{15}$ are alkyl containing 1 - 6 carbon atoms;
X is oxygen atom, sulphur atom, NH or NR16 group; $R_{16}$ is alkyl containing 1 - 6 carbon atoms;
M is counter ion.

5. The water-dispersible amphoteric polyurethane according to Claim 4, **characterized in that** Component D is one or the mixture of over 2 selected from N-methyl diethanolamine, N-ethyl diethanolamine, N-butyl diethanolamine, N-methyl dipropanolamine and triethanolamine.

6. The water-dispersible amphoteric polyurethane according to Claim 1, **characterized in that**, in Component E, y is 10 - 50 and (x+z) 2 - 10.

7. The water-dispersible amphoteric polyurethane according to any one of Claim 1 to 6, **characterized in that** the molar ratio of the isocyanate groups in Component A to the total amount of the active H functional groups in Component B, C, D and E is 2.0:1.0 - 2.0:1.8.

8. The water-dispersible amphoteric polyurethane according to any one of Claim 1 to 6, **characterized in that** the percentage of Component B in the total mass of Component B, C, D and E is 50 - 85%.

9. The water-dispersible amphoteric polyurethane according to Claim 8, **characterized in that** the percentage of Component B in the total mass of Component B, C, D and E is 60 - 80%.

10. The water-dispersible amphoteric polyurethane according to any one of Claim 1 to 6, **characterized in that** the molar ratio of Component D to C is 1:3 - 1:10.

11. The water-dispersible amphoteric polyurethane according to any one of Claim 1 to 6, **characterized in that** the E/(B+C+D) is 5:100 - 15:100.

12. A method for preparing the water-dispersible amphoteric polyurethane according to any one of Claim 1 to 11, **characterized in that**, comprising the following steps in order:

(1) Component A, B, D and E react to get prepolymer containing isocyanate groups;

(2) the prepolymer containing isocyanate groups react with Component C;
(3) then further carry out neutralization and chain-extension to get the water-dispersible amphoteric polyurethane; or,
(1) Component A, B, C and E react to get prepolymer containing isocyanate groups;
(2) the prepolymer containing isocyanate groups react with Component D;
(3) then further carry out neutralization and chain-extension to get the water-dispersible amphoteric polyurethane.

**13.** The method for preparing the water-dispersible amphoteric polyurethane according to Claim 12, **characterized in that**, the reaction in Step (1) and (2) can be carried out in the presence of appropriate catalyst, wherein the organic solvents can be N-methylpyrrolidone, dimethyl fumaramide, dimethyl amide, acetone, methyl ethyl ketone, ethyl acetate and isobutyl acetate.

**14.** The application of the water-dispersible amphoteric polyurethane in reinforced concrete according to any one of Claim 1 to 11, wherein the dosing amount of the water-dispersible amphoteric polyurethane is 0.1 - 5% of the total mass of the concrete.

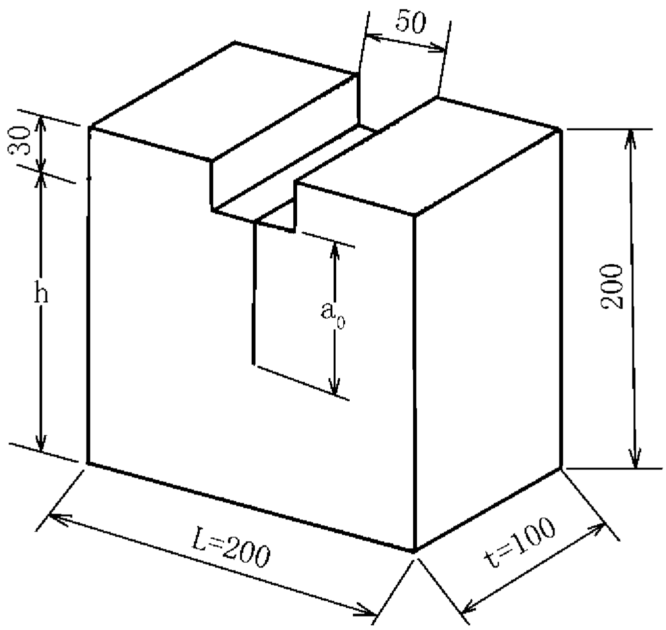


FIG. 1

# INTERNATIONAL SEARCH REPORT

International application No.
**PCT/CN2011/076987**

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: C08G 18/-; C08L 75/-; C04B 24/-; C04B 26/-

Documentation searched other than minimum documentation to the extent that such documents are included in the fields searched

Electronic data base consulted during the international search (name of data base and, where practicable, search terms used)

WPI, EPODOC, CNPAT, CNKI: carbamate, water based, water disperse, carboxylic acid, sulfonic acid, chain extension, polyalkoxy olefin, polyethylene glycol, hydramine, polyurethane?, urethane?, aqueous, aq., water+, dispers+, hydrophilic, amphoteric, amphiphatic, amphiphilic, amphipathic, anionic, anion, cationic, cation, diol, polyol, carboxyl, sulphon+, sulfon+, tertiary amine, quaternary ammonium, active hydrogen, active group?, reactive group?, +isocyanate?, amino, polyalkylene, polyoxyalkylene, polyethylene, polyoxyethylene, polypropylene, polyoxypropylene, polyether, extend+, diamine, polyamine, amine, +olamine, dimethylol propionic acid, dihydroxymethyl, triethanolamine, concrete

**C. DOCUMENTS CONSIDERED TO BE RELEVANT**

| Category* | Citation of document, with indication, where appropriate, of the relevant passages | Relevant to claim No. |
|---|---|---|
| A | CN 1547461 A (SHISEIDO CO., LTD.), 17 November 2004 (17.11.2004), the whole document | 1-14 |
| A | CN 1406996 A (NATIONAL STARCH AND CHEMICAL INVESTMENT HOLDING CORPORATION), 02 April 2003 (02.04.2003), the whole document | 1-14 |
| A | CN 1433298 A (NATIONAL STARCH AND CHEMICAL INVESTMENT HOLDING CORPORATION), 30 July 2003 (30.07.2003), the whole document | 1-14 |
| A | CN 101638468 A (ANHUI UNIVERSITY), 03 February 2010 (03.02.2010), the whole document | 1-14 |
| A | CN 1189471 A (BAYER AG), 05 August 1998 (05.08.1998), the whole document | 1-14 |

☒ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 01 April 2012 (01.04.2012) | **19 April 2012 (19.04.2012)** |

| Name and mailing address of the ISA/CN: | Authorized officer |
|---|---|
| State Intellectual Property Office of the P. R. China<br>No. 6, Xitucheng Road, Jimenqiao<br>Haidian District, Beijing 100088, China<br>Facsimile No.: (86-10) 62019451 | **TANG, Dongmei**<br>Telephone No.: (86-10) **62084436** |

Form PCT/ISA/210 (second sheet) (July 2009)

## INTERNATIONAL SEARCH REPORT

International application No.
**PCT/CN2011/076987**

**C (Continuation). DOCUMENTS CONSIDERED TO BE RELEVANT**

| Category* | Citation of document, with indication, where appropriate, of the relevant passages | Relevant to claim No. |
|---|---|---|
| A | CN 1590429 A (TAKEDA CHEMICAL INDUSTRIES, LTD.), 09 March 2005 (09.03.2005), the whole document | 1-14 |
| A | JP 2003183138 A (SHISEIDO CO., LTD.), 03 July 2003 (03.07.2003), the whole document | 1-14 |
| A | JP 2002020451 A (NIPPON NSC KK), 23 January 2002 (23.01.2002), the whole document | 1-14 |
| A | JP 10036471 A (NIPPON NSC KK), 10 February 1998 (10.02.1998), the whole document | 1-14 |
| A | US 3903032 A (KAO SOAP CO., LTD.), 02 September 1975 (02.09.1975), the whole document | 1-14 |

Form PCT/ISA/210 (continuation of second sheet) (July 2009)

**INTERNATIONAL SEARCH REPORT**
Information on patent family members

International application No.
**PCT/CN2011/076987**

| Patent Documents referred in the Report | Publication Date | Patent Family | Publication Date |
|---|---|---|---|
| CN 1547461 A | 17.11.2004 | CN 1309364 C | 11.04.2007 |
| | | DE 60227959 D1 | 11.09.2008 |
| | | EP 1410782 B1 | 30.07.2008 |
| | | WO 03002073 A1 | 09.01.2003 |
| | | EP 1410782 A1 | 21.04.2004 |
| | | TW 1251494 B | 21.03.2006 |
| | | US 2004197298 A1 | 07.10.2004 |
| | | KR 20040043200 A | 24.05.2004 |
| | | KR 939674 B1 | 03.02.2010 |
| | | JP 2011057689 A | 24.03.2011 |
| | | JP 2003012440 A | 15.01.2003 |
| CN 1406996 A | 02.04.2003 | BR 0203347 A | 27.05.2003 |
| | | US 2003088041 A1 | 08.05.2003 |
| | | EP 1275672 A1 | 15.01.2003 |
| | | DE 60207154 D1 | 15.12.2005 |
| | | AU 5067702 A | 02.01.2003 |
| | | DE 60207154 T2 | 10.08.2006 |
| | | MX 2002006419 A1 | 01.08.2004 |
| | | AU 783970 B2 | 12.01.2006 |
| | | JP 2003012760 A | 15.01.2003 |
| | | JP 4688351 B2 | 25.05.2011 |
| | | US 6646092 B2 | 11.11.2003 |
| | | CN 1260263 C | 21.06.2006 |
| | | MX 244107 B | 13.03.2007 |
| | | EP 1275672 B1 | 09.11.2005 |
| CN 1433298 A | 30.07.2003 | US 6737069 B1 | 18.05.2004 |
| | | MX 259791 B | 20.08.2008 |
| | | EP 1202710 A2 | 08.05.2002 |
| | | MX 2002001353 A1 | 01.08.2002 |
| | | JP 4104791 B2 | 18.06.2008 |
| | | EP 1202710 B1 | 25.01.2012 |
| | | WO 0110394 A2 | 15.02.2001 |
| | | BR 0013225 A | 04.06.2002 |
| | | JP 2001048735 A | 20.02.2001 |
| | | AU 6764100 A | 05.03.2001 |
| | | WO 0110394 A3 | 31.01.2002 |
| CN 101638468 A | 03.02.2010 | CN 101638468 B | 09.11.2011 |
| CN 1189471 A | 05.08.1998 | DE 19654429 A1 | 25.06.1998 |

Form PCT/ISA/210 (patent family annex) (July 2009)

## INTERNATIONAL SEARCH REPORT
Information on patent family members

International application No.
**PCT/CN2011/076987**

| Patent Documents referred in the Report | Publication Date | Patent Family | Publication Date |
|---|---|---|---|
| | | TW 422867 B | 21.02.2001 |
| | | MX 201523 B | 24.04.2001 |
| | | KR 100531705 B1 | 27.01.2006 |
| | | JP 3946332 B2 | 18.07.2007 |
| | | KR 98064514 A | 07.10.1998 |
| | | CA 2224956 A1 | 24.06.1998 |
| | | EP 0850896 B1 | 02.04.2003 |
| | | US 6007619 A | 28.12.1999 |
| | | EP 0850896 B9 | 22.10.2003 |
| | | CA 2224956 C | 31.07.2007 |
| | | JP 10203855 A | 04.08.1998 |
| | | ES 2195074 T3 | 01.12.2003 |
| | | EP 0850896 A1 | 01.07.1998 |
| | | MX 9710337 A | 01.08.1998 |
| | | DE 59709688 D1 | 08.05.2003 |
| | | CN 1088047 C | 24.07.2002 |
| CN 1590429 A | 09.03.2005 | CN 100354329 C | 12.12.2007 |
| | | JP 2005060690 A | 10.03.2005 |
| JP 2003183138 A | 03.07.2003 | JP 3701238 B2 | 28.09.2005 |
| JP 2002020451 A | 23.01.2002 | None | |
| JP 10036471 A | 10.02.1998 | JP 2950778 B2 | 20.09.1999 |
| US 3903032 A | 02.09.1975 | JP 50055698 A | 15.05.1975 |
| | | GB 1456890 A | 30.11.1976 |
| | | JP 52040356 B | 12.10.1977 |
| | | IT 1021451 B | 30.01.1978 |

Form PCT/ISA/210 (patent family annex) (July 2009)

## INTERNATIONAL SEARCH REPORT

International application No.

**PCT/CN2011/076987**

**A. CLASSIFICATION OF SUBJECT MATTER**

C08G 18/32 (2006.01) i

C08G 18/48 (2006.01) i

C08G 18/44 (2006.01) i

C08G 18/10 (2006.01) i

C08G 18/72 (2006.01) i

C04B 24/24 (2006.01) i

C04B 26/16 (2006.01) i

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 23579 A
- US P413014 A
- US P4228053 P4
- CN 1189471 A
- CN 1088047 C